# EUROPÄISCHE PATENTSCHRIFT

(11) **EP 3 696 055 B1**
(45) Veröffentlichungstag und Bekanntmachung des Hinweises auf die Patenterteilung: **20.07.2022**
(21) Anmeldenummer: 20151091.4
(22) Anmeldetag: 10.01.2020
(51) Int. Cl.: B62D 21/12, B62D 21/18, B62D 63/02, B62D 49/00

(54) **FAHRZEUGKONSTRUKTION MIT ANSCHLUSSKNOTEN-LASCHEN-BOLZEN-VERBINDUNG UND UNTERSCHIEDLICHEN ANSCHLUSSKNOTEN-PAAREN**
VEHICLE STRUCTURE COMPRISING A CONNECTION NODE TAB INTERCONNECTION AND DIFFERENT CONNECTION NODE PAIRS
CONSTRUCTION DE VÉHICULE POURVUE DE RACCORDEMENT NOEUD-LANGUETTE-BOULON DE RACCORDEMENT ET DIFFÉRENTES PAIRES DE NOEUDS DE RACCORDEMENT

(30) Priorität: 15.02.2019 DE 102019103862
(43) Veröffentlichungstag der Anmeldung: 19.08.2020
(73) Patentinhaber: MAN Truck & Bus SE, 80995 München (DE)
(72) Erfinder: Sattler, Steve, 80992 München (DE); Hintereder, Jürgen, 83313 Siegsdorf (DE); Kondic, Darko, 85757 Karlsfeld (DE); Burger, Norbert, 84030 Ergolding (DE); Haag, Jens, 85757 Karlsfeld (DE)
(74) Vertreter: v. Bezold & Partner Patentanwälte - PartG mbB

(56) Entgegenhaltungen:
- EP-A2- 2 711 270
- WO-A1-01/62576
- WO-A1-2014/084777
- US-B1- 6 199 894

## Beschreibung

Die Erfindung betrifft eine Fahrzeugkonstruktion, vorzugsweise ein in seiner Längsrichtung z. B. tragstrukturell und/oder funktionell modular aufgebautes Fahrzeug-Chassis, insbesondere Nutzfahrzeug-Chassis.

Zum allgemeinen Stand der Technik kann zunächst auf die WO 2014/084777 A1 und die EP 2 711 270 A2 verwiesen werden, aus denen bereits Fahrzeugkonstruktionen mit mehreren Tragstrukturen bekannt sind.

Im Stand der Technik sind sogenannte leiterrahmenförmige Nutzfahrzeug-Chassis mit zwei in Querrichtung voneinander beabstandeten einstückig-integral durchgängigen Längsträgern bekannt.

Derartige Nutzfahrzeug-Chassis werden in Abhängigkeit der Fahrzeuganwendung (z. B. Sattelzugmaschine, Kipper-Lastkraftwagen, etc.) konstruiert und weisen deshalb in Abhängigkeit der Fahrzeuganwendung z. B. unterschiedliche Längen, Breiten, Stärken, etc. auf. An die Nutzfahrzeug-Chassis sind ebenfalls in Abhängigkeit der Fahrzeuganwendung Funktionskomponenten (z. B. verschiedene Tanks, Motoren, Batterien, etc.) anmontiert. Einmal definiert und produziert bleibt das jeweilige Nutzfahrzeug-Chassis mitsamt seinen anmontierten Funktionskomponenten im Laufe der Fahrzeuglebensdauer üblicherweise unverändert bestehen. Nachträgliche Veränderungen sind, wenn überhaupt, nur mit erheblichem Umbau- und Anpassungsaufwand zu realisieren und führen zugleich meist zu einem Eingriff in die Fahrzeugstatik.

Die Anordnung der Funktionskomponenten am Nutzfahrzeug-Chassis wird vom zur Verfügung stehenden Raum beeinflusst. Dadurch ergeben sich Zwänge hinsichtlich der Anordnung von insbesondere großen Funktionskomponenten, deren technische Lösung meist in einer Stückelung der großen Funktionskomponenten besteht, z. B. die Stückelung eines großen Tanks in mehrere kleinere Tanks, wozu oftmals auch varianztreibende Adapterlösung erforderlich sind.

Ein modular aufgebautes Fahrzeug-Chassis, dessen Tragstrukturen lösbar und folglich austauschbar miteinander verbunden sind, wäre demgegenüber deutlich flexibler.

Eine Aufgabe der Erfindung ist es, eine geeignete Verbindungsmöglichkeit für vorzugsweise Fahrzeug-Chassis-Module bildende Tragstrukturen für eine Fahrzeugkonstruktion zu schaffen.

Diese Aufgabe wird mit den Merkmalen des Hauptanspruchs gelöst. Vorteilhafte Weiterbildungen sind in den Unteransprüchen offenbart oder ergeben sich aus der folgenden Beschreibung bevorzugter Ausführungsformen der Erfindung.

Die Erfindung schafft eine Fahrzeugkonstruktion, vorzugsweise ein in seiner Längsrichtung z. B. tragstrukturell und/oder funktionell modular aufgebautes Fahrzeug-Chassis, insbesondere Nutzfahrzeug-Chassis, z. B. Lastkraftwagen- oder Transporter-Chassis.

Die Fahrzeugkonstruktion weist zumindest zwei Tragstrukturen auf, die benachbarte Anschlussknoten zur Verbindung der Tragstrukturen aufweisen.

Die Tragstrukturen sind vorzugsweise über mehrere, vorzugsweise vier, Anschlussknoten-Paare lösbar und/oder tragstrukturell miteinander verbunden.

Die Fahrzeugkonstruktion zeichnet sich vor allem dadurch aus, dass die Tragstrukturen zumindest ein erstes Paar z. B. lösbar miteinander verbundener benachbarter Anschlussknoten aufweist und die benachbarten Anschlussknoten des ersten Paars jeweils zumindest eine Lasche umfassen, um z. B. eine Laschen-Bolzen-Verbindung der benachbarten Anschlussknoten des ersten Paars ausbilden zu können.

Die Fahrzeugkonstruktion zeichnet sich alternativ oder ergänzend vor allem dadurch aus, dass die Tragstrukturen ein erstes Paar benachbarter Anschlussknoten und ein zweites Paar benachbarter Anschlussknoten aufweisen und die benachbarten Anschlussknoten des ersten Paars unterschiedlich ausgeführt sind wie die benachbarten Anschlussknoten des zweiten Paars.

Die Laschen-Bolzen-Verbindung eignet sich als besonders vorteilhafte Verbindung zwischen den zwei Tragstrukturen.

Die unterschiedlich ausgebildeten Anschlussknoten-Paare ermöglichen vorteilhaft eine Anpassung an die im Einsatz der Fahrzeugkonstruktion erzeugten unterschiedlichen Kraft-/Lastbeanspruchungen, z. B. durch Auf- und Ab-Bewegungen erzeugte dynamische Beanspruchungen.

Im Kontext der Erfindung können die Tragstrukturen folglich vorzugsweise über unterschiedlich ausgeführte Anschlussknoten-Paare z. B. lösbar miteinander verbunden werden.

Somit ist es z. B. möglich, die Tragstrukturen über z. B. zwei erste obere Paare und z. B. zwei untere zweite Paare oder umgekehrt miteinander zu verbinden.

Es ist möglich, dass einer der benachbarten Anschlussknoten des ersten Paars zumindest eine Lasche aufweist und einer der benachbarten Anschlussknoten des ersten Paars zumindest zwei Laschen aufweist.

Die zumindest eine Lasche kann z. B. sandwichförmig zwischen den zumindest zwei Laschen angeordnet sein.

Ein Bolzen (z. B. ein Spannelement, zweckmäßig eine Spannschraube etc.) kann sich z. B. durch die Laschen der benachbarten Anschlussknoten des ersten Paars erstrecken. Alternativ oder ergänzend bildet der Bolzen ein Spannelement, vorzugsweise um die Laschen gegeneinander zu verspannen. Über z. B. eine elastische Deformation zumindest einer der Laschen können Spaltmaße zweckmäßig überbrückt werden. Beim Spannen (z. B. Verschrauben) können (insbesondere aus Montagegründen erforderliche) Toleranzen in Fügespalten zwischen den Laschen (insbesondere zwischen den Kontaktflächen der Laschen) über (zweckmäßig ausreichende) Vorspannreserven der Verspannung (z. B Verschraubung) durch das Spannen geschlossen werden, so dass vorzugsweise eine Losdrehsicherung der Spannverbindung über (zweckmäßig ausreichend) Restvorspannung im Bolzen (insbesondere Schraube) gewährleistet werden kann. Das Spannen entspricht vorzugsweise einem Verschrauben, so dass die Spannverbindung vorzugsweise eine Schraubverbindung darstellen kann.

Es ist möglich, dass die Laschen der benachbarten Anschlussknoten des ersten Paars im Wesentlichen in Längsrichtung der Fahrzeugkonstruktion ausgerichtet sind und/oder der Bolzen sich im Wesentlichen in Querrichtung der Fahrzeugkonstruktion erstreckt.

Die benachbarten Anschlussknoten des zweiten Paars sind über eine Klemmverbindung lösbar miteinander verbunden und/oder über zumindest ein im Wesentlichen in Querrichtung der Fahrzeugkonstruktion erstreckendes Spannelement lösbar miteinander verbunden.

Die Klemmverbindung kann somit vorzugsweise ein z. B. im Wesentlichen in Querrichtung der Fahrzeugkonstruktion erstreckendes Spannelement umfassen.

Die Klemmverbindung umfasst vorzugsweise zwei Klemmbacken.

Es ist möglich, dass die Klemmverbindung zumindest ein Spannelement (z. B. eine zentrale Spannschraube) umfasst und z. B. die zwei Klemmbacken über das Spannelement vorzugsweise im Wesentlichen in Querrichtung der Fahrzeugkonstruktion zueinander hin beaufschlagbar sind, um vorzugsweise die benachbarten Anschlussknoten des zweiten Paars im Wesentlichen in Längsrichtung der Fahrzeugkonstruktion zueinander hin zu beaufschlagen.

Das Spannelement erstreckt sich vorzugsweise im Wesentlichen in Querrichtung der Fahrzeugkonstruktion.

Die Klemmverbindung kann z. B. auch zwei Spannelemente aufweisen, z. B. jeweils ein Spannelement pro Anschlussknoten.

Im Kontext der Erfindung können die zwei Klemmbacken relativ zu den benachbarten Anschlussknoten z. B. lösbare und/oder separate Bauteile sein, wobei es auch möglich ist, dass einer der Klemmbacken unlösbar, z. B. einstückig-integral, an einem der benachbarten Anschlussknoten ausgebildet ist, z. B. angeformt, angegossen, angeschmiedet, angeschweißt, etc. ist.

Einer der Klemmbacken kann somit z. B. unlösbar und/oder einstückig integral an einem der benachbarten Anschlussknoten ausgebildet sein.

Das Spannelement erstreckt sich vorzugsweise im Wesentlichen in Querrichtung der Fahrzeugkonstruktion und ist z. B. von seitlich außen zum Spannen und/oder Lösen betätigbar.

Die Spannrichtung, z. B. Verschraubungsrichtung, kann folglich vorzugsweise im Wesentlichen der Querrichtung der Fahrzeugkonstruktion entsprechen.

Die zwei Klemmbacken können z. B. im Wesentlichen U-, Omega- oder C-förmig ausgebildet sein und/oder einen z. B. sandwichförmigen Formschluss mit den benachbarten Anschlussknoten im Wesentlichen in Längsrichtung der Fahrzeugkonstruktion bilden. Dadurch können z. B. Zugkräfte in Längsrichtung der Fahrzeugkonstruktion vorzugsweise formschlüssig übertragen werden.

Zumindest einer der Klemmbacken kann z. B. über zumindest einen sandwichförmigen Eingriff einen Formschluss mit zumindest einem der benachbarten Anschlussknoten im Wesentlichen in Höhenrichtung der Fahrzeugkonstruktion bilden. Dadurch können z. B. auf- und abwärts gerichtete Kräfte, insbesondere Schubkräfte, im Wesentlichen in Höhenrichtung der Fahrzeugkonstruktion vorzugsweise formschlüssig übertragen werden.

Es ist möglich, dass das Spannelement die zwei Klemmbacken im Wesentlichen in Querrichtung der Fahrzeugkonstruktion zueinander hin beaufschlagt und/oder die zwei Klemmbacken die benachbarten Anschlussknoten des zweiten Paars im Wesentlichen in Längsrichtung der Fahrzeugkonstruktion zueinander hin beaufschlagen.

Es ist möglich, dass die benachbarten Anschlussknoten des zweiten Paars z. B. zur Anlage der Klemmbacken zwei im Wesentlichen komplementär geformte (z. B. im Wesentlichen U-, Omega- oder C-förmige) Kulissen bilden.

Es ist möglich, dass die Fahrzeugkonstruktion sich im Einsatz (insbesondere im Fahrbetrieb) in deren Höhenrichtung auf- und ab-bewegt, wodurch Zug- und Druckkräfte und Schubkräfte erzeugt werden können.

Bei einer Ausführungsform der Erfindung können die Klemmbacken tragstrukturell zur Übertragung von im Einsatz der Fahrzeugkonstruktion erzeugten Zugkräften dienen, z. B. im Wesentlichen in Längsrichtung der Fahrzeugkonstruktion. Alternativ oder ergänzend können die benachbarten Anschlussknoten z. B. innenliegende Stirnseiten aufweisen und die innenliegenden Stirnseiten können tragstrukturell miteinander in Verbindung gebracht werden, zur Übertragung von im Einsatz der Fahrzeugkonstruktion erzeugten Druckkräften, z. B. im Wesentlichen in Längsrichtung der Fahrzeugkonstruktion.

Auf- und abwärts gerichtete Kräfte, insbesondere Schubkräfte, in Höhenrichtung der Fahrzeugkonstruktion können wie schon zuvor erwähnt z. B. über einen Formschluss zwischen zumindest einer Klemmbacke und zumindest einem der beiden Anschlussknoten des zweiten Paars vorzugsweise formschlüssig übertragen werden.

Es ist möglich, dass die benachbarten Anschlussknoten des zweiten Paars eine Durchlassöffnung für das Spannelement bilden und das Spannelement durch die Durchlassöffnung geführt ist, z. B. zumindest abschnittsweise ohne die benachbarten Anschlussknoten zu kontaktieren.

Die Durchlassöffnung und die innenliegenden Stirnseiten können sich z. B. benachbart und/oder parallel zueinander erstrecken.

Es ist möglich, dass die Klemmbacken sich im Wesentlichen in Längsrichtung der Fahrzeugkonstruktion erstrecken und/oder das Spannelement sich im Wesentlichen in Querrichtung der Fahrzeugkonstruktion erstreckt.

Die benachbarten Anschlussknoten des ersten Paars und/oder des zweiten Paars können jeweils zumindest eine Anschlusseinrichtung zum Anschließen z. B. eines Längsträgersegments, eines Querträgersegments und/oder eines Vertikalträgersegments aufweisen.

Die Anschlusseinrichtung kann z. B. eine im Wesentlichen U-, Omega- oder C-förmige Anschlussfläche aufweisen und zwar insbesondere zur z. B. passgenauen Anlage des Längsträgersegments, des Querträgersegments und/oder des Vertikalträgersegments. Dabei ist es z. B. möglich, dass die Anschlusseinrichtung dazu dient, das Längsträgersegment, das Querträgersegments und/oder das Vertikalträgersegment von innen zu halten.

Es ist möglich, dass die benachbarten Anschlussknoten des zweiten Paars aus jeweils einem im Wesentlichen U-, Omega- oder C-Profil gebildet sind und/oder zweckmäßig zusammen eine im Wesentlichen H-Form bilden, vorzugsweise bei Betrachtung in Höhenrichtung der Fahrzeugkonstruktion, und/oder zur z. B. sandwichförmigen Aufnahme eines Längsträgersegment, eines Querträgersegment und/oder eines Vertikalträgersegments, insbesondere eines Teilabschnitts davon, dienen.

Es ist möglich, dass die Tragstrukturen jeweils ein Fahrzeug-Chassis-Modul/Fahrgestell bilden.

Es ist möglich, dass die Längsträgersegmente der Tragstrukturen über benachbarte Anschlussknoten des ersten Paars und/oder des zweiten Paars miteinander verbunden sind und in Querrichtung der Fahrzeugkonstruktion voneinander beabstandete Chassis-Längsträgerkonstruktionen bilden.

Die Chassis-Längsträgerkonstruktionen sind zweckmäßig über die benachbarten Anschlussknoten des ersten Paars und/oder des zweiten Paars vorzugsweise nicht einstückig-integral (z. B. von der Fahrzeug-Vorderachse zu der Fahrzeug-Hinterachse) durchlaufend ausgeführt, sondern in deren Längsrichtung modular gestückelt ausgebildet.

Im Kontext der Erfindung können insbesondere Zug- und/oder Druckkräfte in den Längsträgersegmenten über die benachbarten Anschlussknoten des ersten Paars und/oder des zweiten Paars vorteilhaft übertragen werden.

Die benachbarten Anschlussknoten des ersten Paars und/oder des zweiten Paars können z. B. zumindest eine Anbindungsstruktur (z. B. zumindest ein Loch und/oder zumindest einen Bolzen etc.) zur Anbindung einer Montagestruktur (z. B. ein Lochblech, ein Winkel-Lochblech etc.) vorzugsweise eines Fahrzeugaufbaus, einer Fahrzeugbatterie und/oder eines Fahrzeugtanks (z. B. Kraftstofftank, Reduktionsmitteltank, Drucklufttank etc.) umfassen.

Der Fahrzeugaufbau kann z. B. eine Sattelkupplung, eine Wechselbrücke, ein Abrollkipper, ein Müllsammelfahrzeug und/oder einen Kofferaufbau (z. B. Kühlkoffer-Aufbau) umfassen.

Die Montagestruktur kann zweckmäßig an beide benachbarte Anschlussknoten des ersten Paars und/oder des zweiten Paars montiert werden und somit vorzugsweise zur Struktursteifigkeit der benachbarten Anschlussknoten beitragen.

Zumindest eine Anbindungsstruktur kann z. B. im Wesentlichen in Querrichtung und/oder Höhenrichtung der Fahrzeugkonstruktion ausgerichtet sein und/oder zumindest ein Montageloch aufweisen.

Es ist möglich, dass die Tragstrukturen insbesondere lösbar tragstrukturell und/oder wiederholt montierbar miteinander verbunden sind, z. B. über die benachbarten Anschlussknoten des ersten Paars und/oder des zweiten Paars.

Es ist möglich, dass die Tragstrukturen jeweils beidseitig zwei in Höhenrichtung der Fahrzeugkonstruktion voneinander beabstandete Längsträgersegmente aufweisen, und/oder beidseitig zwei in Längsrichtung der Fahrzeugkonstruktion voneinander beabstandete Vertikalträgersegmente aufweisen. Alternativ oder ergänzend kann zumindest eine der Tragstrukturen auch z. B. diagonal verlaufende Trägersegmente aufweisen.

Die jeweilige Tragstruktur kann z. B. zumindest einen, vorzugsweise zumindest zwei in Längsrichtung der Fahrzeugkonstruktion voneinander beabstandete Querträgersegmente (z. B. eine oder mehrere Schubaussteifungen, Ringspanten und/oder Schubbleche) aufweisen, vorzugsweise zwei obere in Längsrichtung der Fahrzeugkonstruktion voneinander beabstandete Querträgersegmente und/oder zwei untere in Längsrichtung der Fahrzeugkonstruktion voneinander beabstandete Querträgersegmente.

Die benachbarten Anschlussknoten des ersten Paars und/oder des zweiten Paars können zweckmäßig z. B. lösbar oder unlösbar miteinander verbunden sein.

Es ist möglich, dass die benachbarten Anschlussknoten des ersten Paars und/oder des zweiten Paars jeweils zur vorzugsweise lösbaren und/oder wiederholt montierbaren Verbindung oder unlösbaren Verbindung mit jeweils einem Längsträgersegment, einem Querträgersegment und/oder einem Vertikalträgersegment der jeweiligen Tragstruktur dienen. Auch hier können alternativ oder ergänzend z. B. diagonal verlaufende Trägersegmente zum Einsatz kommen.

Es ist möglich, dass benachbarte Anschlussknoten des zweiten Paars im Wesentlichen in Längsrichtung der Fahrzeugkonstruktion auf Stoß aneinander anliegen, und/oder z. B. über jeweils eine im Wesentlichen in Höhen- und in Querrichtung der Fahrzeugkonstruktion ausgerichtete Schnittebene voneinander trennbar sind.

Die jeweilige Tragstruktur kann z. B. vier vordere Anschlussknoten und vier hintere Anschlussknoten aufweisen, wobei die vier vorderen Anschlussknoten und die vier hinteren Anschlussknoten z. B. Eckpunkte der jeweiligen Tragstruktur bilden können. Die oberen Anschlussknoten können z. B. gemäß dem ersten Paar gebildet werden und die unteren Anschlussknoten können z. B. gemäß dem zweiten Paar gebildet werden oder umgekehrt.

Es ist möglich, dass die jeweilige Tragstruktur eine im Wesentlichen Quaderform bildet und die Quaderform z. B. durch die Anschlussknoten und alternativ oder ergänzend durch die Längsträgersegmente, die Querträgersegmente und/oder die Vertikalträgersegmente der jeweiligen Tragstruktur definiert wird.

Es ist möglich, dass die jeweilige Tragstruktur als (z. B. im Wesentlichen quaderförmige) Gitter- oder Geripperahmenkonstruktion ausgebildet ist.

Die Tragstrukturen sind vorzugsweise selbstragend ausgebildet (und insbesondere entsprechend ihrer Aufgabe in der Gesamttragstruktur dimensioniert).

Die Tragstrukturen können vorzugsweise mit z. B. unterschiedlichen Funktionskomponenten ausgestattet sein (z. B. einer oder mehreren Batterien, Energiespeichersystemen (z. B. Wasserstofftanks oder Gastanks), Traktionsbatterien, Druckluft-Tanks, Kraftstoff-Tanks, Reduktionsmittel-Tanks, Motoren, Steuerungseinrichtungen, Pumpen- und/oder Kühlsystemen, Beladungs- und/oder Betankungssystemen, und/oder Luftaufbereitungsystemen (z. B. Luftpresser) etc.).

Die Fahrzeugkonstruktion ist vorzugsweise modular, insbesondere modulbaukastenartig, umkonfigurierbar, insbesondere auch nach der ursprünglichen Endmontage der Fahrzeugkonstruktion.

Zu erwähnen ist, dass die hierin erwähnte "lösbare Verbindung" vorzugsweise ausgeführt sein kann, so dass die lösbar miteinander verbundenen Teile insbesondere wiederholt montierbar sind, also z. B. mehrfach voneinander getrennt und wieder aneinander montiert werden können.

Zu erwähnen ist noch, dass die Längsrichtung der Fahrzeugkonstruktion im Kontext der Erfindung z. B. im Wesentlichen parallel zur Mittelachse der Fahrzeugkonstruktion verlaufen kann und/oder z. B. durch die Längserstreckung der Längsträgersegmente definiert werden kann.

Die Längsträgersegmente können z. B. mit einer Abweichung im Bereich von max. ungefähr +/-35, +/-25°, +/-10° oder +/-5° schräg zur Mittelachse der Fahrzeugkonstruktion verlaufen.

Die Querrichtung und/oder Höhenrichtung der Fahrzeugkonstruktion kann zweckmäßig im Wesentlichen rechtwinklig (z. B. mit einer Abweichung im Bereich von max. ungefähr +/-35, +/-25°, +/-10° oder +/-5°) zur Mittelachse der Fahrzeugkonstruktion ausgerichtet sein.

Die benachbarten Anschlussknoten des ersten Paars und/oder des zweiten Paars können jeweils z. B. ein Blechteil oder ein Guss-, Schmiede- oder Frästeil sein und folglich vorzugsweise mittels eines Guss-, Schmiede- oder Fräsverfahrens hergestellt sein.

Die Erfindung umfasst auch ein Gesamtfahrzeug z. B. in Form eines Nutzfahrzeugs, vorzugsweise ein Lastkraftwagen (z. B. Sattelzugmaschine , Chassis oder Transporter), mit einer Fahrzeugkonstruktion wie hierin offenbart.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt eine perspektivische Explosionsdarstellung einer Fahrzeugkonstruktion gemäß einer Ausführungsform der Erfindung,
- Figur 2: zeigt eine perspektivische Darstellung der Fahrzeugkonstruktion der Figur 1 in zusammengebautem Zustand,
- Figur 3: zeigt eine vergrößerte Darstellung der Fahrzeugkonstruktion der Figuren 1 und 2,
- Figuren 4 bis 6: zeigen vergrößerte Darstellungen der Fahrzeugkonstruktion der Figuren 1 bis 3,
- Figur 7: zeigt eine perspektivische Explosionsdarstellung einer Fahrzeugkonstruktion gemäß einer anderen Ausführungsform der Erfindung,
- Figur 8: zeigt ein erstes Anschlussknoten-Konzept gemäß einer Ausführungsform der Erfindung,
- Figur 9: zeigt ein zweites Anschlussknoten-Konzept gemäß einer Ausführungsform der Erfindung,
- Figur 10: zeigt eine Draufsicht auf das Anschlussknoten-Konzept der Figur 9,
- Figur 11: zeigt eine Querschnittsansicht des Anschlussknoten-Konzepts der Figuren 9 und 10,
- Figur 12: zeigt eine perspektivische Darstellung des Anschlussknoten-Konzepts der Figuren 9 bis 11, insbesondere mit dargestellten beispielhaften Montagestrukturen,
- Figur 13: zeigt eine perspektivische Darstellung des Anschlussknoten-Konzepts der Figuren 9 bis 12, insbesondere mit dargestellten beispielhaften Montagestrukturen, und
- Figur 14: zeigt ein weiteres Anschlussknoten-Konzept gemäß einer Ausführungsform der Erfindung.

Die in den Figuren beschriebenen bevorzugten Ausführungsformen der Erfindung stimmen teilweise überein, wobei für ähnliche oder identische Teile die gleichen Bezugszeichen verwendet werden und zu deren Erläuterung auch auf die Beschreibung der anderen Ausführungsformen verwiesen werden kann. Der Übersichtlichkeit halber sind nicht alle Teile in allen Figuren mit Bezugszeichen versehen.

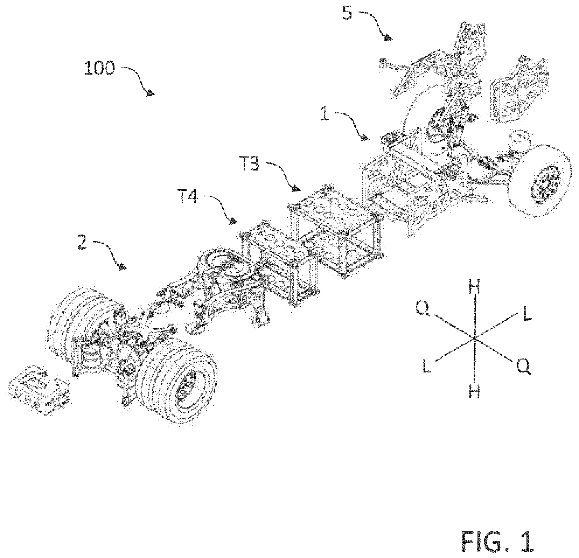

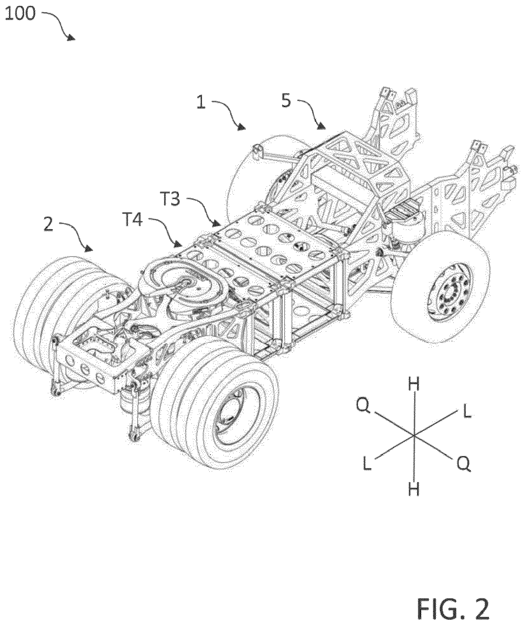

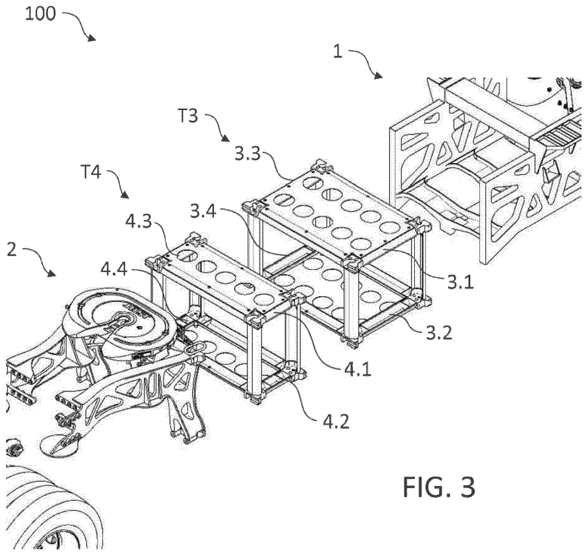

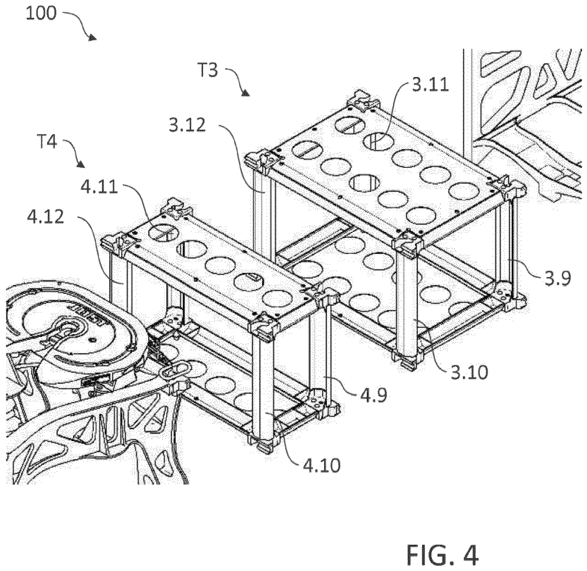

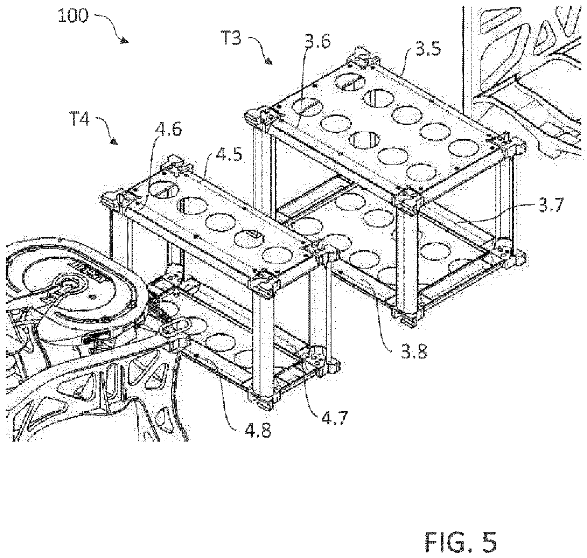

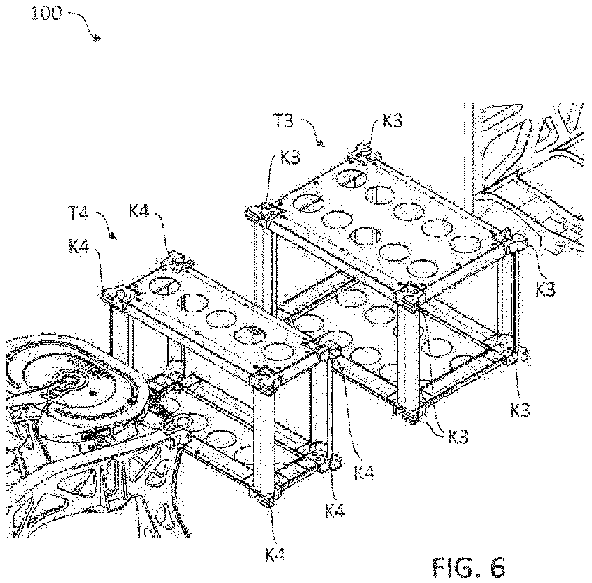

Eine beispielhafte Fahrzeugkonstruktion 100 gemäß einer Ausführungsform der Erfindung wird nachfolgend unter Bezugnahme auf die Figuren 1 bis 6 beschrieben.

Die Fahrzeugkonstruktion 100 ist als ein in seiner Längsrichtung L tragstrukturell und vorzugsweise funktionell modular aufgebautes Fahrzeug-Chassis für ein Gesamtfahrzeug in Form eines Nutzfahrzeugs, insbesondere einer Sattelzugmaschine, ausgeführt.

Die Fahrzeugkonstruktion 100 kann z. B. ein mit Rädern versehenes Vorderachsmodul 1 und ein z. B. mit einer Zwillingsbereifung versehenes Hinterachsmodul 2 umfassen. Auf das Vorderachsmodul 1 kann ein optionales Modul 5 zur Aufnahme einer Nutzfahrzeug-Kabine aufgesetzt sein. Das Vorderachsmodul 1 umfasst eine Fahrzeug-Vorderachse und das Hinterachsmodul 2 umfasst eine Fahrzeug-Hinterachse.

Zwischen dem Vorderachsmodul 1 und dem Hinterachsmodul 2 sind zwei in Längsrichtung L der Fahrzeugkonstruktion 100 benachbarte Tragstrukturen T3, T4 angeordnet, nämlich beispielhaft eine erste Tragstruktur T3 und eine zweite Tragstruktur T4, wobei im Kontext der Erfindung die Tragstrukturen T3, T4 alternativ oder ergänzend auch an anderer Stelle positioniert sein können. Die Tragstrukturen T3, T4 bilden jeweils ein Fahrzeug-Chassis-Modul.

Die Tragstruktur T3 umfasst in Querrichtung Q der Fahrzeugkonstruktion 100 voneinander beabstandete Längsträgersegmente 3.1 bis 3.4, wobei die Längsträgersegmente 3.1 bis 3.4 in Querrichtung Q der Fahrzeugkonstruktion 100 voneinander beabstandete Chassis-Längsträgerkonstruktionen bilden.

Die Tragstruktur T4 umfasst ebenfalls in Querrichtung Q der Fahrzeugkonstruktion 100 voneinander beabstandete Längsträgersegmente 4.1 bis 4.4, wobei die Längsträgersegmente 4.1 bis 4.4 in Querrichtung Q der Fahrzeugkonstruktion 100 voneinander beabstandete Chassis-Längsträgerkonstruktionen bilden.

Die zwei Chassis-Längsträgerkonstruktionen der Fahrzeugkonstruktion 100 sind somit z. B. nicht einstückig-integral durchlaufend vom Vorderachsmodul 1 zum Hinterachsmodul 2, sondern in Längsrichtung L der Fahrzeugkonstruktion 100 gestückelt ausgebildet.

Die Tragstruktur T3 umfasst z. B. acht Anschlussknoten K3 und die Tragstruktur T4 umfasst z. B. acht Anschlussknoten K4.

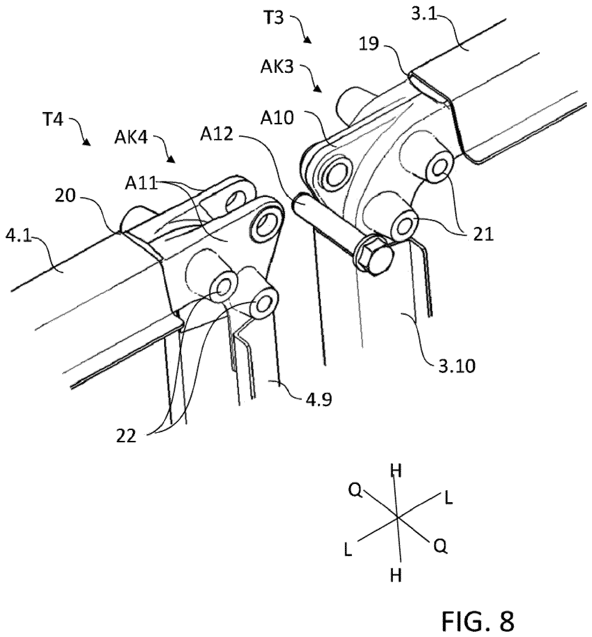

Alle oder zumindest einige der Anschlussknoten K3 und K4 können gemäß dem in Figur 8 gezeigten Anschlussknoten-Konzept ausgeführt sein (erstes Paar benachbarter Anschlussknoten AK3, AK4).

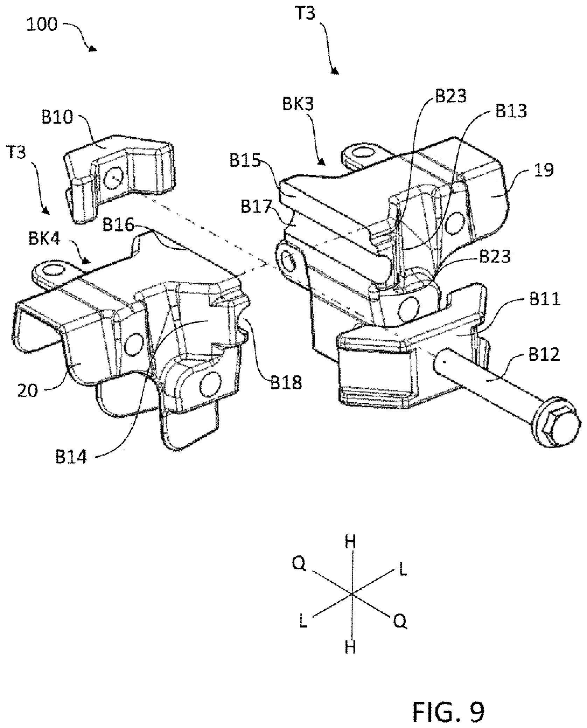

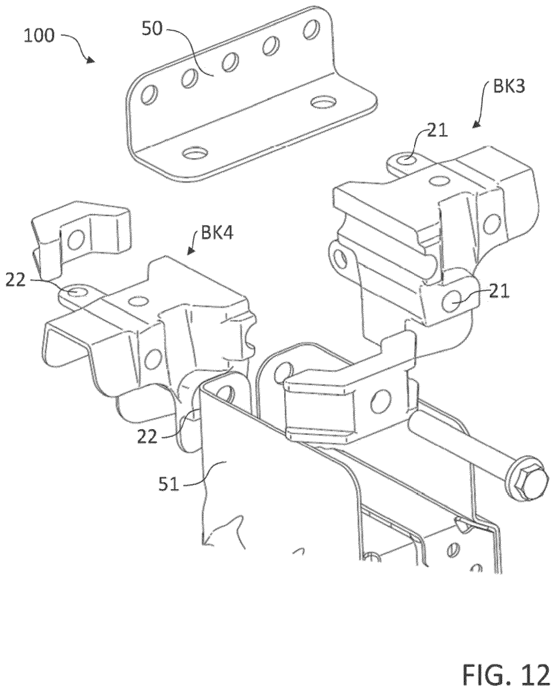

Alle oder zumindest einige der Anschlussknoten K3 und K4 können gemäß dem in den Figuren 9 bis 13 gezeigten Anschlussknoten-Konzept ausgeführt sein (zweites Paar benachbarter Anschlussknoten BK3, BK4).

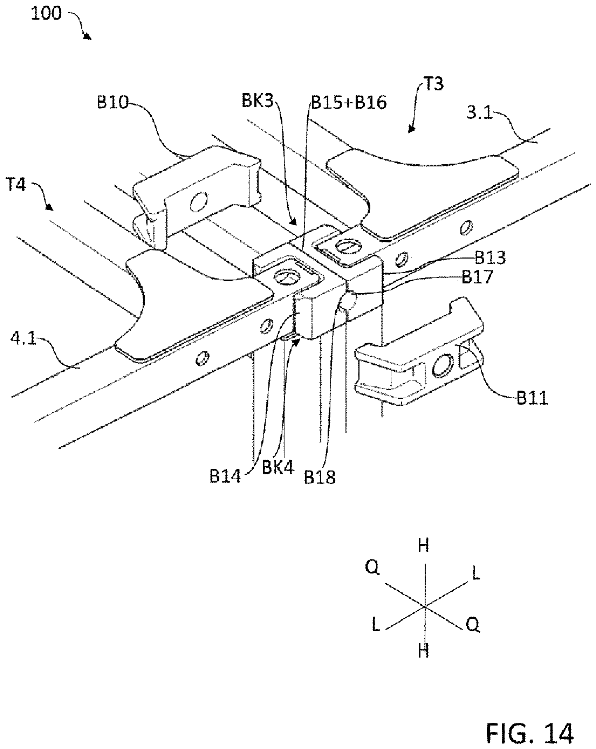

Alle oder zumindest einige der Anschlussknoten K3 und K4 können gemäß dem in Figur 14 gezeigten Anschlussknoten-Konzept ausgeführt sein (zweites Paar benachbarter Anschlussknoten BK3, BK4).

Die Tragstruktur T3 umfasst insbesondere beidseitig zwei in Höhenrichtung H der Fahrzeugkonstruktion 100 voneinander beabstandete Längsträgersegmente 3.1 bis 3.4 und beidseitig zwei in Längsrichtung L der Fahrzeugkonstruktion 100 voneinander beabstandete Vertikalträgersegmente 3.9 bis 3.12 und zusätzlich zwei obere in Längsrichtung L der Fahrzeugkonstruktion 100 voneinander beabstandete Querträgersegmente 3.5 bis 3.6 und zwei untere in Längsrichtung L der Fahrzeugkonstruktion 100 voneinander beabstandete Querträgersegmente 3.7 bis 3.8. Die erste Tragstruktur T3 nimmt dadurch eine im Wesentlichen quaderförmige Gestalt an.

Die Anschlussknoten K3 dienen zur zweckmäßig lösbaren oder unlösbaren Verbindung mit jeweils einem Längsträgersegment 3.1 bis 3.4 und optional einem Querträgersegment 3.5 bis 3.8 und/oder einem Vertikalträgersegment 3.9 bis 3.12.

Die Tragstruktur T4 umfasst ebenfalls beidseitig zwei in Höhenrichtung H der Fahrzeugkonstruktion 100 voneinander beabstandete Längsträgersegmente 4.1 bis 4.4 und beidseitig zwei in Längsrichtung L der Fahrzeugkonstruktion 100 voneinander beabstandete Vertikalträgersegmente 4.9 bis 4.12 und zusätzlich zwei obere in Längsrichtung L der Fahrzeugkonstruktion 100 voneinander beabstandete Querträgersegmente 4.5 bis 4.6 und zwei untere in Längsrichtung L der Fahrzeugkonstruktion 100 voneinander beabstandete Querträgersegmente 4.7 bis 4.8. Die zweite Tragstruktur T4 nimmt dadurch eine im Wesentlichen quaderförmige Gestalt an.

Die Anschlussknoten K4 dienen zur zweckmäßig lösbaren oder unlösbaren Verbindung mit jeweils einem Längsträgersegment 4.1 bis 4.4 und optional einem Querträgersegment 4.5 bis 4.8 und/oder einem Vertikalträgersegment 4.9 bis 4.12.

Benachbarte Anschlussknoten K3, K4 der ersten Tragstruktur T3 und der zweiten Tragstruktur T4 (in den in den Figuren 1 bis 7 gezeigten Ausführungsformen vier Anschlussknoten-Paare) sind lösbar aneinander montiert und dienen somit zusätzlich dazu, die erste Tragstruktur T3 lösbar mit der zweiten Tragstruktur T4 zu verbinden.

Die Längsträgersegmente 3.1 bis 3.4 der ersten Tragstruktur T3 und die Längsträgersegmente 4.1 bis 4.4 der zweiten Tragstruktur T4 sind folglich über Anschlussknoten-Paare K3, K4 in Längsrichtung L der Fahrzeugkonstruktion 100 lösbar und vorzugsweise tragstrukturell miteinander verknüpft.

Auch das Vorderachsmodul 1 kann über Anschlussknoten-Paare mit der Tragstruktur T3 verbunden sein, während das Hinterachsmodul 2 über Anschlussknoten-Paare mit der Tragstruktur T4 verbunden sein kann.

Die erste Tragstruktur T3 umfasst optional eine obere Platte und eine untere Platte z. B. zum Tragen von Funktionskomponenten und/oder zur Aussteifung der Tragstruktur T3, wobei die zweite Tragstruktur T4 ebenfalls optional eine obere Platte und eine untere Platte z. B. zum Tragen von Funktionskomponenten und/oder zur Aussteifung der Tragstruktur T4 umfasst.

Im Bedarfsfall können nachträglich eine oder mehrere der hierin offenbarten Tragstrukturen T3 und T4 ausgetauscht werden und somit das Anwendungsprofil des Gesamtfahrzeugs im Laufe der Fahrzeuglebensdauer relativ einfach verändert werden.

Sämtliche spezifischen Funktionskomponenten können z. B. innerhalb der jeweiligen Tragstruktur T3, T4 abgebildet werden. Beispielsweise können alle Funktionskomponenten zur Luftaufbereitung in einem Technikmodul (z. B. Tragstruktur T3) zusammengefasst werden, wohingegen z. B alle Funktionskomponenten einer Traktionsbatterie in einem Energiemodul (z. B. Tragstruktur T4) zusammengefasst werden können. Werden im Laufe des Produktlebenszyklus Funktionskomponenten verändert, hinzugefügt oder eliminiert, reduziert sich z. B. der Dokumentationsaufwand nur auf die jeweilige Tragstruktur T3, T4, ohne auf die Gesamtfahrzeug-Dokumentation Bezug nehmen zu müssen.

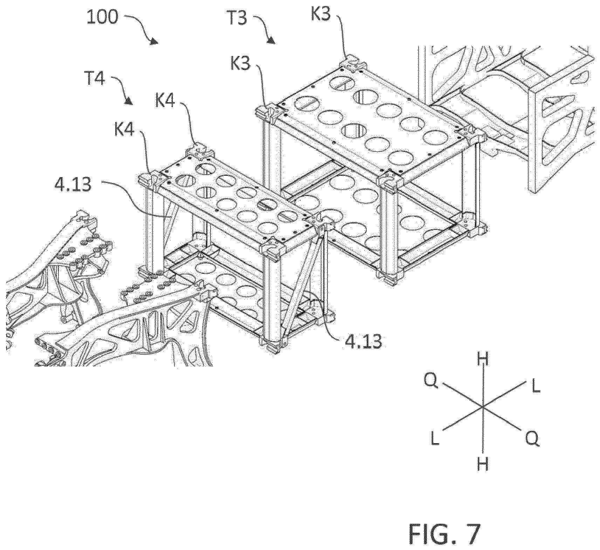

Figur 7 zeigt eine Fahrzeugkonstruktion 100 gemäß einer Ausführungsform der Erfindung, die im Wesentlichen der Ausführungsform der Figuren 1 bis 6 entsprechen kann.

Eine Besonderheit ist aber, dass die Tragstruktur T4 zwei in jeweils einer im Wesentlichen vertikalen Ebene ausgerichtete Diagonalverstrebungen 4.13 zur Aussteifung der Tragstruktur T4 umfasst, wobei sich die jeweilige vertikale Ebene in Längsrichtung L der Fahrzeugkonstruktion 100 erstreckt. Alternativ oder ergänzend zu den Diagonalverstrebungen 4.13 können Platten verwendet werden. Die Tragstruktur T3 kann ebenfalls derartige Diagonalverstrebungen und/oder Platten umfassen, sofern erforderlich.

Die hierhin erwähnten Platten und/oder Diagonalverstrebungen dienen vorzugsweise zur Erhöhung insbesondere der Torsionssteifigkeit der zugehörigen Tragstruktur T3, T4 und können z. B. in seitlicher Anordnung zumindest einen Teil einer Seitencrasheinrichtung zum Schutz der Funktionskomponenten vor einem Seitenaufprall bilden.

Figur 8 zeigt ein erstes Anschlussknoten-Konzept gemäß einer Ausführungsform der Erfindung. Das erste Anschlussknoten-Konzept beschreibt insbesondere ein erstes Paar benachbarter Anschlussknoten AK3, AK4.

So umfassen die Tragstrukturen T3, T4 zumindest ein erstes Paar benachbarter Anschlussknoten AK3, AK4, über das sie vorzugsweise lösbar miteinander verbunden sind. Die benachbarten Anschlussknoten AK3, AK4 umfassen jeweils zumindest eine Lasche A10, A11, um mit einem Bolzen A12 eine Laschen-Bolzen-Verbindung A10, A11, A12 der benachbarten Anschlussknoten AK3, AK4 auszubilden.

Der Anschlussknoten AK3 umfasst zumindest eine Lasche A10, wobei der Anschlussknoten AK4 zumindest zwei Laschen A11 umfasst. Die Lasche A10 des Anschlussknotens AK3 ist sandwichförmig zwischen den zwei Laschen A11 des Anschlussknotens AK4 angeordnet.

Der Bolzen A12 ist durch die Laschen A10, A11 geführt und als Spannelement (z. B. Spannschraube) ausgebildet, um die Laschen A10, A11 gegeneinander zu verspannen.

Es ist möglich, dass beim Verschrauben die aus Montagegründen erforderlichen Toleranzen in den Fügespalten (z. B. zwischen den Kontaktflächen von A10 - außen - und den beiden Kontaktflächen A11 - jeweils innen -) über ausreichende Vorspannreserven der Verschraubung beim Verschrauben geschlossen werden, so dass eine Losdrehsicherung der Schraubverbindung über genügend Restvorspannung im Bolzen A12 (z. B. Schraube) gewährleistet werden kann.

Die Laschen A10, A11 sind im Wesentlichen in Längsrichtung L der Fahrzeugkonstruktion 100 ausgerichtet, wobei der Bolzen A12 sich im Wesentlichen in Querrichtung Q der Fahrzeugkonstruktion 100 erstreckt.

Der Anschlussknoten AK3 kann darüber hinaus z. B. mehrere Anbindungsstrukturen 21 (z. B. Befestigungslöcher) zur Anbindung einer oder mehrerer in Figur 8 nicht gezeigter Montagestrukturen aufweisen. Ebenso kann der Anschlussknoten BK4 z. B. mehrere Anbindungsstrukturen 22 (z. B. Befestigungslöcher) zur Anbindung einer oder mehrerer Montagestrukturen aufweisen.

Die Montagestrukturen können z. B. Teil eines Fahrzeugaufbaus, Teil einer Fahrzeugbatterie und/oder Teil eines Fahrzeugtanks sein. Die Montagestrukturen können zweckmäßig an nur einen einzigen Anschlussknoten AK3, AK4 montiert sein oder aber z. B. mittels Überbrückung des Bolzens A12 an beide, z. B. um die Struktursteifigkeit der benachbarten Anschlussknoten AK3, AK4 zu erhöhen.

Die Anbindungsstrukturen 21, 22 können im Wesentlichen in Querrichtung Q und/oder in Höhenrichtung H der Fahrzeugkonstruktion 100 ausgerichtet sein und vorzugsweise zumindest ein Montageloch umfassen.

Es können sämtliche benachbarte Anschlussknoten zwischen zwei Tragstrukturen T3, T4 gemäß dem in Figur 8 gezeigten Anschlussknoten-Konzept ausgeführt sein. Es sind aber auch Kombinationen unterschiedlicher Anschlussknoten-Paare möglich, so dass z. B. ein erstes Paar benachbarter Anschlussknoten (AK3, AK4) und ein zweites Paar benachbarter Anschlussknoten (AK3, AK4) zur Verfügung gestellt ist und die benachbarten Anschlussknoten (AK3, AK4) des ersten Paars unterschiedlich ausgeführt sind wie die benachbarten Anschlussknoten (K3, K4) des zweiten Paars.

Die Figuren 9 bis 13 zeigen unterschiedliche Ansichten eines zweiten Anschlussknoten-Konzepts gemäß einer Ausführungsform der Erfindung, gemäß dessen zumindest einige der unter Bezugnahme auf die Figuren 1 bis 7 beschriebenen Anschlussknoten K3 und K4 vorzugsweise ausgeführt werden können. Das zweite Anschlussknoten-Konzept beschreibt insbesondere ein zweites Paar benachbarter Anschlussknoten BK3, BK4. Das zweite Anschlussknoten-Konzept wird nachfolgend unter gemeinsamer Bezugnahme auf die Figuren 9 bis 13 beschrieben.

Figur 9 zeigt insbesondere benachbarte Anschlussknoten, nämlich einen Anschlussknoten BK3 einer Tragstruktur T3 und einen Anschlussknoten BK4 einer Tragstruktur T4.

Die benachbarten Anschlussknoten BK3, BK4 bilden insbesondere ein zweites Paar benachbarter Anschlussknoten BK3, BK4.

Eine Besonderheit ist, dass die benachbarten Anschlussknoten BK3, BK4 über eine Klemmverbindung insbesondere lösbar miteinander verbunden sind.

Die Klemmverbindung umfasst zwei im Wesentlichen U- Omega- oder C-förmige Klemmbacken B10 und B11. Die benachbarten Anschlussknoten BK3, BK4 bilden zur vorzugsweise passgenauen Anlage der Klemmbacken B10 und B11 zwei komplementär und somit ebenfalls im Wesentlichen U- Omega oder C-förmig geformte Kulissen B13 und B14 zum sandwichförmigen Formschluss-Eingriff mit den Klemmbacken B10 und B11 im Wesentlichen in Längsrichtung L der Fahrzeugkonstruktion 100. Die Kulissen B13, B14 erzeugen mit den Klemmbacken B10, B11 eine Kraftumlenkung, mittels der die benachbarten Anschlussknoten BK3, BK4 in Längsrichtung L der Fahrzeugkonstruktion 100 zueinander hin beaufschlagt werden. Im Kontext der Erfindung ist es z. B. möglich, dass der Klemmbacken 10 unlösbar und einstückig-integral am Anschlussknoten BK3 oder Anschlussknoten BK4 zur Verfügung gestellt ist, z. B. angegossen, angeschmiedet, angeschweißt, etc. ist.

Der Klemmbacken B11 bildet einen Formschluss B23 mit den benachbarten Anschlussknoten BK3, BK4 im Wesentlichen in Höhenrichtung H der Fahrzeugkonstruktion 100. Der Formschluss B23 kann z. B. über zumindest einen sandwichförmigen Eingriff des Klemmbackens B11 mit den benachbarten Anschlussknoten BK3, BK4 gebildet werden. Der Klemmbacken B10 kann optional ebenfalls einen derartigen Formschluss in Höhenrichtung H der Fahrzeugkonstruktion 100 bilden.

Die Klemmbacken B10, B11 sind über ein Spannelement B12 (z. B. eine zentrale Spannschraube) im Wesentlichen in Querrichtung Q der Fahrzeugkonstruktion 100 zueinander hin beaufschlagbar, wodurch die benachbarten Anschlussknoten BK3, BK4 im Wesentlichen in Längsrichtung L der Fahrzeugkonstruktion 100 zueinander hin beaufschlagt werden können.

Die benachbarten Anschlussknoten BK3, BK4 bilden eine Durchlassöffnung B17 und B18 für das Spannelement B12, wobei das Spannelement B12 durch die Durchlassöffnung B17 und B18 geführt ist und zwar vorzugsweise so, dass es die benachbarten Anschlussknoten BK3, BK4 nicht kontaktiert.

Die Klemmbacken B10, B11 erstrecken sich im Wesentlichen in Längsrichtung L der Fahrzeugkonstruktion 100, während sich das Spannelement B12 im Wesentlichen in Querrichtung Q der Fahrzeugkonstruktion 100 erstreckt.

Der Anschlussknoten BK3 umfasst eine Anschlusseinrichtung 19 zum Anschließen eines in Figur 9 nicht gezeigten Längsträgersegments. Der Anschlussknoten BK3 umfasst ferner eine Anschlusseinrichtung zum Anschließen eines in Figur 9 nicht gezeigten Vertikalträgersegments und kann optional eine Anschlusseinrichtung zum Anschließen eines Querträgersegments aufweisen.

Der Anschlussknoten BK4 umfasst ebenfalls eine Anschlusseinrichtung 20 zum Anschließen eines in Figur 9 nicht gezeigten Längsträgersegments. Der Anschlussknoten BK4 umfasst ferner eine Anschlusseinrichtung zum Anschließen eines in Figur 9 nicht gezeigten Vertikalträgersegments und kann optional eine Anschlusseinrichtung zum Anschließen eines Querträgersegments aufweisen.

Der Anschlussknoten BK3 kann darüber hinaus z. B. mehrere Anbindungsstrukturen 21 (z. B. Befestigungslöcher) zur Anbindung einer oder mehrerer Montagestrukturen 50, 51 aufweisen. Ebenso kann der Anschlussknoten BK4 z. B. mehrere Anbindungsstrukturen 22 (z. B. Befestigungslöcher) zur Anbindung einer oder mehrerer Montagestrukturen 50, 51 aufweisen.

Die Montagestrukturen 50, 51 können z. B. Teil eines Fahrzeugaufbaus, Teil einer Fahrzeugbatterie und/oder Teil eines Fahrzeugtanks sein. Die Montagestrukturen 50, 51 können zweckmäßig an nur einen einzigen Anschlussknoten BK3, BK4 montiert sein oder aber z. B. mittels Überbrückung des Spannelements B12 an beide, z. B. um die Struktursteifigkeit der benachbarten Anschlussknoten BK3, BK4 zu erhöhen.

Die Anbindungsstrukturen 21, 22 können im Wesentlichen in Querrichtung Q und/oder in Höhenrichtung H der Fahrzeugkonstruktion (100) ausgerichtet sein und vorzugsweise zumindest ein Montageloch umfassen.

Im Einsatz der Fahrzeugkonstruktion 100 wird die Fahrzeugkonstruktion 100 in deren Höhenrichtung H üblicherweise auf- und ab-bewegt, wodurch in den Tragstrukturen T3, T4 und zwar insbesondere in den Längsträgersegmenten 3.1 bis 3.4 und 4.1 bis 4.4 Zug- und Druckkräfte erzeugt werden.

Zur Übertragung von im Einsatz der Fahrzeugkonstruktion 100 erzeugten Druckkräften in den Längsträgersegmenten 3.1 bis 3.4 und 4.1 bis 4.4 können die benachbarten Anschlussknoten BK3, BK4 innenliegende Stirnseiten B15 und B16 aufweisen, die zweckmäßig auf Stoß aneinander liegen können und tragstrukturell miteinander in Verbindung bringbar sind.

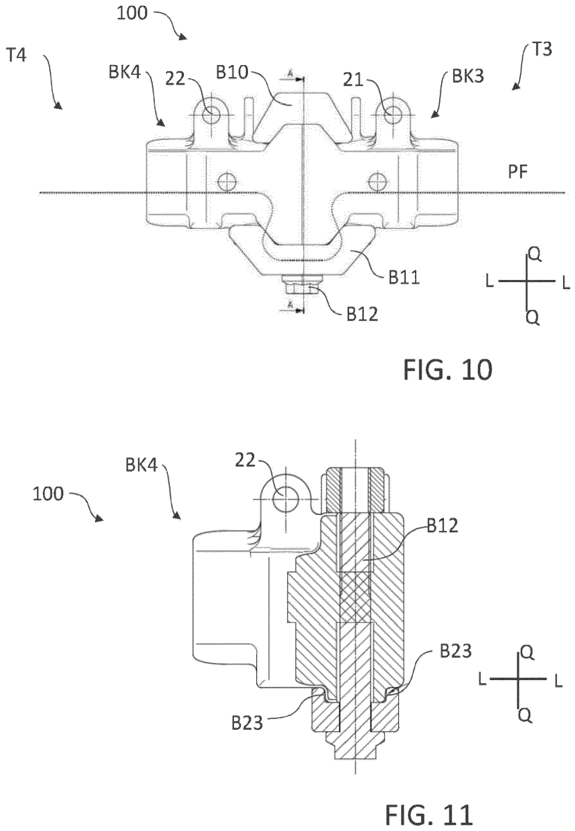

Zur Übertragung von im Einsatz der Fahrzeugkonstruktion 100 erzeugten Zugkräften in den Längsträgersegmenten 3.1 bis 3.4 und 4.1 bis 4.4 dienen insbesondere die Klemmbacken B10, B11, wie insbesondere Figur 10 und dem dort gezeigten Kraftfluss PF entnommen werden kann. Die Klemmbacken B10, B11 sind somit vorzugsweise tragstruktureller Teil der Längsträgersegmente 3.1 bis 3.4 und 4.1 bis 4.4 und folglich tragstruktureller Teil der Chassis-Längsträgerkonstruktion(en). Die Klemmbacken B10, B11 können insbesondere als tragstruktureller Bypass zur Umgehung des Spannelements B12 genutzt werden.

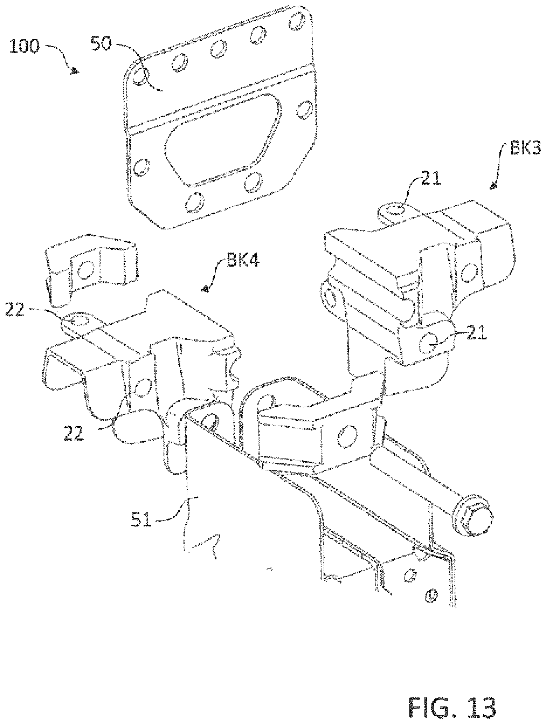

Figur14 zeigt ein weiteres Anschlussknoten-Konzept gemäß einer anderen Ausführungsform der Erfindung, gemäß dessen zumindest einige der unter Bezugnahme auf die Figuren 1 bis 7 beschriebenen Anschlussknoten K3 und K4 vorzugsweise ausgeführt werden können. Es sind Tragstrukturen T3, T4 möglich, die jeweils Anschlussknoten gemäß Anschlussknoten-Konzept der Figur 8, gemäß Anschlussknoten-Konzept der Figuren 9 bis 13 und/oder gemäß Anschlussknoten-Konzept der Figur 13 aufweisen können.

Auch die in Figur 14 gezeigten benachbarten Anschlussknoten BK3, BK4 sind über eine Klemmverbindung miteinander verbunden sind. Die benachbarten Anschlussknoten BK3, BK4 bilden insbesondere ein zweites Paar benachbarter Anschlussknoten BK3, BK4, gleichwohl auch die Anschlussknoten-Konzepte der Figuren 9 bis 13 und 14 zur Verbindung zweier Tragstrukturen T3, T4 miteinander kombiniert werden können.

Die Klemmverbindung umfasst zwei im Wesentlichen U- Omega- oder C-förmige Klemmbacken B10 und B11. Die benachbarten Anschlussknoten BK3, BK4 können z. B. zur vorzugsweise passgenauen Anlage der Klemmbacken B10, B11 zwei komplementär und somit ebenfalls im Wesentlichen U- Omega- oder C-förmig geformte Kulissen B13 und B14 aufweisen, insbesondere zum sandwichförmigen Formschluss-Eingriff mit den Klemmbacken B10, B11 im Wesentlichen in Längsrichtung L der Fahrzeugkonstruktion 100.

Die in Figur 14 gezeigten benachbarten Anschlussknoten BK3, BK4 sind aus jeweils einem im Wesentlichen U- Omega- oder C-Profil gebildet und bilden zusammen eine im Wesentlichen H-Form, insbesondere bei Betrachtung in der Höhenrichtung H der Fahrzeugkonstruktion 100.

Der C- oder U-förmige Anschlussknoten BK3 dient zur abschnittsweisen sandwichförmigen Aufnahme eines Längsträgersegments 3.1, wobei der C- Omega- oder U-förmige Anschlussknoten K4 zur abschnittsweisen sandwichförmigen Aufnahme eines Längsträgersegments 4.1 dient.

Die Klemmbacken B10, B11 sind über ein in Figur 14 nicht gezeigtes Spannelement (z. B. eine zentrale Spannschraube wie das Spannelement B12) im Wesentlichen in Querrichtung Q der Fahrzeugkonstruktion 100 zueinander hin beaufschlagbar, wodurch die benachbarten Anschlussknoten BK3, BK4 im Wesentlichen in Längsrichtung L der Fahrzeugkonstruktion 100 zueinander hin zu beaufschlagt werden können.

Die benachbarten Anschlussknoten BK3, BK4 bilden eine Durchlassöffnung B17 und B18 für das Spannelement, wobei das Spannelement durch die Durchlassöffnung B17, B18 geführt werden kann und zwar vorzugsweise so, dass es die benachbarten Anschlussknoten BK3, BK4 nicht kontaktiert.

Die Klemmbacken B10, B11 erstrecken sich im Wesentlichen in Längsrichtung L der Fahrzeugkonstruktion 100, während sich das Spannelement im Wesentlichen in Querrichtung Q der Fahrzeugkonstruktion 100 erstreckt.

Zur Übertragung von im Einsatz der Fahrzeugkonstruktion 100 erzeugten Druckkräften können die benachbarten Anschlussknoten BK3, BK4 innenliegende, sich kontaktierende Stirnseiten B15 und B16 aufweisen.

Zur Übertragung von im Einsatz der Fahrzeugkonstruktion 100 erzeugten Zugkräften dienen insbesondere die Klemmbacken B10, B11.

Es ist möglich, dass die Längsträgersegmente, Querträgersegmente und/oder Vertikalträgersegmente z. B. auch zweckmäßig schräg und somit nicht rechtwinklig zum Koordinatensystem L-Q-H verlaufen können. Es ist möglich, dass die Anschlussknoten z. B. lösbar an Längsträgersegmente, Querträgersegmente und/oder Vertikalträgersegmente der jeweiligen Tragstruktur zweckmäßig anmontiert sein können und somit z. B. Einzelbauteile darstellen können. Alternativ oder ergänzend ist es möglich, dass die Anschlussknoten z. B. unlösbar (z. B. einstückig-integral und/oder durch eine Schweißverbindung etc.) an Längsträgersegmenten, Querträgersegmenten und/oder Vertikalträgersegmenten der jeweiligen Tragstruktur zweckmäßig ausgebildet sein können und somit z. B. die Anschlussknoten und die Längsträgersegmente, die Querträgersegmente und/oder die Vertikalträgersegmente ein (z. B. im Wesentlichen knochenförmiges) Einzelbauteil bilden können.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Vorderachsmodul

- 2: Hinterachsmodul

- T3: Tragstruktur
- 3.1 bis 3.4: Längsträgersegmente
- 3.5 bis 3.8: Querträgersegmente
- 3.9 bis 3.12: Vertikalträgersegmente
- K3: Anschlussknoten, z. B. ausgeführt als Anschlussknoten AK3 oder BK3

- T4: Tragstruktur
- 4.1 bis 4.4: Längsträgersegmente
- 4.5 bis 4.8: Querträgersegmente
- 4.9 bis 4.12: Vertikalträgersegmente
- 4.13: Diagonalverstrebung, insbesondere Diagonalträgersegment
- K4: Anschlussknoten, z. B. ausgeführt als Anschlussknoten AK4 oder BK4

- AK3: Anschlussknoten, z. B. für erstes Paar
- AK4: Anschlussknoten, z. B. für erstes Paar
- A10: Lasche
- A11: Lasche(n)
- A12: Bolzen, vorzugsweise Spannelement, z. B. Spannbolzen

- 5: Modul zur Aufnahme einer Nutzfahrzeug-Kabine

- BK3: Anschlussknoten, z. B. für zweites Paar
- BK4: Anschlussknoten, z. B. für zweites Paar
- B10: Klemmbacke
- B11: Klemmbacke
- B12: Spannelement
- B13: Kulisse(n)
- B14: Kulisse(n)
- B15: Stirnseite
- B16: Stirnseite
- B17: Durchlassöffnung
- B18: Durchlassöffnung

- 19: Anschlusseinrichtung
- 20: Anschlusseinrichtung
- 21: Anbindungsstruktur
- 22: Anbindungsstruktur

- B23: Formschluss

- 50: Montagestruktur, z. B. eines Fahrzeugaufbaus
- 51: Montagestruktur, z. B. einer Fahrzeugbatterie und/oder eines Fahrzeugtanks
- PF: Lastfluss, insbesondere in Längsrichtung der Fahrzeugkonstruktion

- L: Längsrichtung der Fahrzeugkonstruktion
- Q: Querrichtung der Fahrzeugkonstruktion
- H: Höhenrichtung der Fahrzeugkonstruktion

- 100: Fahrzeugkonstruktion

## Patentansprüche

1. Fahrzeugkonstruktion (100), vorzugsweise modular aufgebautes Fahrzeug-Chassis (100), mit zumindest zwei Tragstrukturen (T3, T4), die benachbarte Anschlussknoten (AK3, AK4, BK3, BK4) zur Verbindung der Tragstrukturen (T3, T4) aufweisen, wobei
- die Tragstrukturen (T3, T4) ein erstes Paar benachbarter Anschlussknoten (AK3, AK4) und ein zweites Paar benachbarter Anschlussknoten (BK3, BK4) aufweisen und die benachbarten Anschlussknoten (AK3, AK4) des ersten Paars unterschiedlich ausgeführt sind wie die benachbarten Anschlussknoten (BK3, BK4) des zweiten Paars, **dadurch gekennzeichnet,**
- **dass** die benachbarten Anschlussknoten (BK3, BK4) des zweiten Paars über eine Klemmverbindung und über zumindest ein im Wesentlichen in Querrichtung (Q) der Fahrzeugkonstruktion (100) erstreckendes Spannelement (B12) lösbar miteinander verbunden sind, und/oder
- **dass** die benachbarten Anschlussknoten (BK3, BK4) des zweiten Paars über eine Klemmverbindung lösbar miteinander verbunden sind und die Klemmverbindung zwei Klemmbacken (B10, B11) umfasst.

2. Fahrzeugkonstruktion (100) nach Anspruch 1, **dadurch gekennzeichnet, dass** einer der benachbarten Anschlussknoten (AK3) des ersten Paars zumindest eine Lasche (A10) aufweist und einer der benachbarten Anschlussknoten (AK4) des ersten Paars zumindest zwei Laschen (A11) aufweist.

3. Fahrzeugkonstruktion (100) nach Anspruch 2, **dadurch gekennzeichnet, dass** die zumindest eine Lasche (A10) sandwichförmig zwischen den zumindest zwei Laschen (A11) angeordnet ist.

4. Fahrzeugkonstruktion (100) nach einem der vorhergehenden Ansprüche, **dadurch gekennzeichnet, dass** ein Bolzen (A12) sich durch die Laschen (A10, A11) der benachbarten Anschlussknoten (AK3, AK4) des ersten Paars erstreckt und/oder ein Bolzen (A12) als ein Spannelement (A12) ausgebildet ist, um die Laschen (A10, A11) gegeneinander zu verspannen.

5. Fahrzeugkonstruktion (100) nach einem der vorhergehenden Ansprüche, **dadurch gekennzeichnet, dass** die Laschen (A10, A11) der benachbarten Anschlussknoten (AK3, AK4) des ersten Paars im Wesentlichen in Längsrichtung (L) der Fahrzeugkonstruktion (100) ausgerichtet sind und/oder der Bolzen (A12) sich im Wesentlichen in Querrichtung (Q) der Fahrzeugkonstruktion (100) erstreckt.

6. Fahrzeugkonstruktion (100) nach einem der vorhergehenden Ansprüche, **dadurch gekennzeichnet, dass** die Klemmverbindung zumindest ein Spannelement (B12) umfasst und die zwei Klemmbacken (B10, B11) über das Spannelement (12) zueinander hin beaufschlagbar sind, vorzugsweise um die benachbarten Anschlussknoten (BK3, BK4) des zweiten Paars im Wesentlichen in Längsrichtung zueinander der Fahrzeugkonstruktion (100) hin zu beaufschlagen.

7. Fahrzeugkonstruktion (100) nach einem der vorhergehenden Ansprüche, **dadurch gekennzeichnet, dass** die zwei Klemmbacken (B10, B11) U-, Omega- oder C-förmig ausgebildet sind und/oder einen Formschluss mit den benachbarten Anschlussknoten (BK3, BK4) des zweiten Paars im Wesentlichen in Längsrichtung (L) der Fahrzeugkonstruktion (100) bilden.

8. Fahrzeugkonstruktion (100) nach einem der vorhergehenden Ansprüche, **dadurch gekennzeichnet, dass** zumindest einer der Klemmbacken (B10, B11) einen Formschluss (B23) mit zumindest einem der benachbarten Anschlussknoten (BK3, BK4) des zweiten Paars im Wesentlichen in Höhenrichtung (H) der Fahrzeugkonstruktion (100) bildet.

9. Fahrzeugkonstruktion (100) nach einem der vorhergehenden Ansprüche, **dadurch gekennzeichnet, dass** das Spannelement (B12) die zwei Klemmbacken (B10, B11) im Wesentlichen in Querrichtung (Q) der Fahrzeugkonstruktion (100) zueinander hin beaufschlagt und/oder die zwei Klemmbacken (B10, B11) die benachbarten Anschlussknoten (BK3, BK4) des zweiten Paars im Wesentlichen in Längsrichtung (L) der Fahrzeugkonstruktion (100) zueinander hin beaufschlagen.

10. Fahrzeugkonstruktion (100) nach einem der vorhergehenden Ansprüche, **dadurch gekennzeichnet, dass** die benachbarten Anschlussknoten (BK3, BK4) des zweiten Paars zur Anlage der Klemmbacken (B10, B11) zwei komplementär geformte Kulissen (B13, B14) bilden.

11. Fahrzeugkonstruktion (100) nach einem der vorhergehenden Ansprüche, **dadurch gekennzeichnet, dass** die Klemmbacken (B10, B11) tragstrukturell zur Übertragung von im Einsatz der Fahrzeugkonstruktion (100) erzeugten Zugkräften dienen.

12. Fahrzeugkonstruktion (100) nach einem der vorhergehenden Ansprüche, **dadurch gekennzeichnet, dass** die benachbarten Anschlussknoten (BK3, BK4) des zweiten Paars innenliegende Stirnseiten (B15, B16) aufweisen und die innenliegenden Stirnseiten (B15, B16) tragstrukturell miteinander in Verbindung bringbar sind, zur Übertragung von im Einsatz der Fahrzeugkonstruktion (100) erzeugten Zug- und/oder Druckkräften.

13. Fahrzeugkonstruktion (100) nach einem der vorhergehenden Ansprüche, **dadurch gekennzeichnet, dass** die benachbarten Anschlussknoten (BK3, BK4) des zweiten Paars eine Durchlassöffnung (B17, B18) für das Spannelement (B12) bilden und das Spannelement (B12) durch die Durchlassöffnung (B17, B18) geführt ist, vorzugsweise ohne die benachbarten Anschlussknoten (BK3, BK4) des zweiten Paars zu kontaktieren.

14. Fahrzeugkonstruktion (100) nach einem der vorhergehenden Ansprüche, **dadurch gekennzeichnet, dass** die Klemmbacken (B10, B11) sich im Wesentlichen in Längsrichtung (L) der Fahrzeugkonstruktion (100) erstrecken und/oder das Spannelement (B12) sich im Wesentlichen in Querrichtung (Q) der Fahrzeugkonstruktion (100) erstreckt.

15. Fahrzeugkonstruktion (100) nach einem der vorhergehenden Ansprüche, **dadurch gekennzeichnet, dass** die benachbarten Anschlussknoten (AK3, AK4, BK3, BK4) des ersten Paars und/oder des zweiten Paars jeweils zumindest eine Anschlusseinrichtung (19, 20) zum Anschließen eines Längsträgersegments (3.1-3.4, 4.1-4.4) und vorzugsweise eines Querträgersegments (3.5-3.8, 4.5-4.8) und/oder eines Vertikalträgersegments (3.9-3.12, 4.9-4.12) aufweisen.

16. Fahrzeugkonstruktion (100) nach einem der vorhergehenden Ansprüche, **dadurch gekennzeichnet, dass** die benachbarten Anschlussknoten (BK3, BK4) des zweiten Paars jeweils aus einem U-, Omega- oder C-Profil gebildet sind, zusammen eine H-Form bilden und/oder zur abschnittsweisen sandwichförmigen Aufnahme eines Längsträgersegments (3.1-3.4, 4.1-4.4), Querträgersegments (3.5-3.8, 4.5-4.8) und/oder Vertikalträgersegments (3.9-3.12, 4.9-4.12) dienen.

17. Fahrzeugkonstruktion (100) nach einem der vorhergehenden Ansprüche, **dadurch gekennzeichnet, dass** die Tragstrukturen (T3, T4) jeweils ein Fahrzeug-Chassis-Modul bilden.

18. Fahrzeugkonstruktion (100) nach einem der vorhergehenden Ansprüche, **dadurch gekennzeichnet, dass** Längsträgersegmente (3.1-3.4, 4.1-4.4) der Tragstrukturen (T3, T4) über benachbarte Anschlussknoten (AK3, AK4, BK3, BK4) des ersten Paars und/oder des zweiten Paars miteinander verbunden sind und im Wesentlichen in Querrichtung (Q) der Fahrzeugkonstruktion (100) voneinander beabstandete Chassis-Längsträgerkonstruktionen bilden.

19. Nutzfahrzeug, vorzugsweise Lastkraftwagen, mit einer Fahrzeugkonstruktion (100) nach einem der vorhergehenden Ansprüche.

## Claims

1. A vehicle construction (100), preferably a vehicle chassis (100) of modular construction, with at least two supporting structures (T3, T4) which have adjacent connector nodes (AK3, AK4, BK3, BK4) for connecting the supporting structures (T3, T4),
- the supporting structures (T3, T4) having a first pair of adjacent connector nodes (AK3, AK4) and a second pair of adjacent connector nodes (BK3, BK4), and the adjacent connector nodes (AK3, AK4) of the first pair being configured differently from the adjacent connector nodes (BK3, BK4) of the second pair,
**characterized**
- **in that** the adjacent connector nodes (BK3, BK4) of the second pair are connected releasably to one another via a clamping connection and via at least one stressing element (B12) which extends substantially in the transverse direction (Q) of the vehicle construction (100), and/or
- **in that** the adjacent connector nodes (BK3, BK4) of the second pair are connected releasably to one another via a clamping connection, and the clamping connection comprising two clamping jaws (B10, B11).

2. The vehicle construction (100) according to Claim 1, **characterized in that** one of the adjacent connector nodes (AK3) of the first pair has at least one bracket (A10), and one of the adjacent connector nodes (AK4) of the first pair has at least two brackets (A11).

3. The vehicle construction (100) according to Claim 2, **characterized in that** the at least one bracket (A10) is arranged in a sandwich-shaped manner between the at least two brackets (A11).

4. The vehicle construction (100) according to one of the preceding claims, **characterized in that** a pin (A12) extends through the brackets (A10, A11) of the adjacent connector nodes (AK3, AK4) of the first pair, and/or a pin (A12) is configured as a clamping element (A12), in order to brace the brackets (A10, A11) against one another.

5. The vehicle construction (100) according to one of the preceding claims, **characterized in that** the brackets (A10, A11) of the adjacent connector nodes (AK3, AK4) of the first pair are oriented substantially in the longitudinal direction (L) of the vehicle construction (100), and/or the pin (A12) extends substantially in the transverse direction (Q) of the vehicle construction (100) .

6. The vehicle construction (100) according to one of the preceding claims, **characterized in that** the clamping connection comprises at least one stressing element (B12), and the two clamping jaws (B10, B11) can be loaded towards one another via the stressing element (12), preferably in order to load the adjacent connector nodes (BK3, BK4) of the second pair towards one another substantially in the longitudinal direction of the vehicle construction (100).

7. The vehicle construction (100) according to one of the preceding claims, **characterized in that** the two clamping jaws (B10, B11) are of U-shaped, omega-shaped or C-shaped configuration, and/or form a positively locking connection to the adjacent connector nodes (BK3, BK4) of the second pair substantially in the longitudinal direction (L) of the vehicle construction (100).

8. The vehicle construction (100) according to one of the preceding claims, **characterized in that** at least one of the clamping jaws (B10, B11) forms a positively locking connection (B23) to at least one of the adjacent connector nodes (BK3, BK4) of the second pair substantially in the vertical direction (H) of the vehicle construction (100).

9. The vehicle construction (100) according to one of the preceding claims, **characterized in that** the stressing element (B12) loads the two clamping jaws (B10, B11) towards one another substantially in the transverse direction (Q) of the vehicle construction (100), and/or the two clamping jaws (B10, B11) load the adjacent connector nodes (BK3, BK4) of the second pair towards one another substantially in the longitudinal direction (L) of the vehicle construction (100).

10. The vehicle construction (100) according to one of the preceding claims, **characterized in that** the adjacent connector nodes (BK3, BK4) of the second pair form two slotted guides (B13, B14) of complementary form for contact with the clamping jaws (B10, B11).

11. The vehicle construction (100) according to one of the preceding claims, **characterized in that** the clamping jaws (B10, B11) serve in supporting structural terms for the transmission of tensile forces which are produced during use of the vehicle construction (100).

12. The vehicle construction (100) according to one of the preceding claims, **characterized in that** the adjacent connector nodes (BK3, BK4) of the second pair have inner end sides (B15, B16), and the inner end sides (B15, B16) can be brought into connection with one another in supporting structural terms, for the transmission of tensile and/or compressive forces which are produced during use of the vehicle construction (100).

13. The vehicle construction (100) according to one of the preceding claims, **characterized in that** the adjacent connector nodes (BK3, BK4) of the second pair form a passage opening (B17, B18) for the clamping element (B12), and the clamping element (B12) is guided through the passage opening (B17, B18), preferably without making contact with the adjacent connector nodes (BK3, BK4) of the second pair.

14. The vehicle construction (100) according to one of the preceding claims, **characterized in that** the clamping jaws (B10, B11) extend substantially in the longitudinal direction (L) of the vehicle construction (100), and/or the clamping element (B12) extends substantially in the transverse direction (Q) of the vehicle construction (100) .

15. The vehicle construction (100) according to one of the preceding claims, **characterized in that** the adjacent connector nodes (AK3, AK4, BK3, BK4) of the first pair and/or the second pair in each case have at least one connector device (19, 20) for connecting a longitudinal beam segment (3.1-3.4, 4.1-4.4) and preferably a crossmember segment (3.5-3.8, 4.5-4.8) and/or a vertical beam segment (3.9-3.12, 4.9-4.12).

16. The vehicle construction (100) according to one of the preceding claims, **characterized in that** the adjacent connector nodes (BK3, BK4) of the second pair are formed in each case from a U-shaped, omega-shaped or C-shaped profile, together form an H-shape and/or serve for sandwich-shaped receiving in sections of a longitudinal beam segment (3.1-3.4, 4.1-4.4), crossmember segment (3.5-3.8, 4.5-4.8) and/or vertical beam segment (3.9-3.12, 4.9-4.12).

17. The vehicle construction (100) according to one of the preceding claims, **characterized in that** the supporting structures (T3, T4) in each case form a vehicle chassis module.

18. The vehicle construction (100) according to one of the preceding claims, **characterized in that** longitudinal beam segments (3.1-3.4, 4.1-4.4) of the supporting structures (T3, T4) are connected to one another via adjacent connector nodes (AK3, AK4, BK3, BK4) of the first pair and/or the second pair, and form chassis longitudinal beam constructions which are spaced apart from one another substantially in the transverse direction (Q) of the vehicle construction (100).

19. A utility vehicle, preferably a lorry, with a vehicle construction (100) according to one of the preceding claims.

## Revendications

1. Construction de véhicule (100), de préférence châssis de véhicule (100) de conception modulaire, comprenant au moins deux structures porteuses (T3, T4) qui présentent des nœuds de raccordement voisins (AK3, AK4, BK3, BK4) servant à relier les structures porteuses (T3, T4), dans laquelle
- les structures porteuses (T3, T4) présentent une première paire de nœuds de raccordement voisins (AK3, AK4) et une deuxième paire de nœuds de raccordement voisins (BK3, BK4), et les nœuds de raccordement voisins (AK3, AK4) de la première paire sont réalisés différemment des nœuds de raccordement voisins (BK3, BK4) de la deuxième paire,
**caractérisée en ce que**
- les nœuds de raccordement voisins (BK3, BK4) de la deuxième paire sont reliés ensemble de manière amovible par une liaison par serrage et par au moins un élément de tension (B12) s'étendant substantiellement dans la direction transversale (Q) de la construction de véhicule (100), et/ou
- les nœuds de raccordement voisins (BK3, BK4) de la deuxième paire sont reliés ensemble de manière amovible par une liaison par serrage, et la liaison par serrage comprend deux mâchoires de serrage (B10, B11).

2. Construction de véhicule (100) selon la revendication 1, **caractérisée en ce que** l'un des nœuds de raccordement voisins (AK3) de la première paire présente au moins une attache (A10), et l'un des nœuds de raccordement voisins (AK4) de la première paire présente au moins deux attaches (A11).

3. Construction de véhicule (100) selon la revendication 2, **caractérisée en ce que** ladite au moins une attache (A10) est prise en sandwich entre les au moins deux attaches (A11).

4. Construction de véhicule (100) selon l'une quelconque des revendications précédentes, **caractérisée en ce qu'**un boulon (A12) s'étend à travers les attaches (A10, A11) des nœuds de raccordement voisins (AK3, AK4) de la première paire, et/ou un boulon (A12) est réalisé sous la forme d'un élément de tension (A12) afin de mettre en tension les attaches (A10, A11) l'une contre l'autre.

5. Construction de véhicule (100) selon l'une quelconque des revendications précédentes, **caractérisée en ce que** les attaches (A10, A11) des nœuds de raccordement voisins (AK3, AK4) de la première paire sont alignés substantiellement dans la direction longitudinale (L) de la construction de véhicule (100), et/ou le boulon (A12) s'étend substantiellement dans la direction transversale (Q) de la construction de véhicule (100) .

6. Construction de véhicule (100) selon l'une quelconque des revendications précédentes, **caractérisée en ce que** la liaison par serrage comprend au moins un élément de tension (B12), et les deux mâchoires de serrage (B10, B11) peuvent être sollicitées l'une vers l'autre par l'intermédiaire de l'élément de tension (12), de préférence afin de solliciter l'un vers l'autre les nœuds de raccordement voisins (BK3, BK4) de la deuxième paire substantiellement dans la direction longitudinale de la construction de véhicule (100).

7. Construction de véhicule (100) selon l'une quelconque des revendications précédentes, **caractérisée en ce que** les deux mâchoires de serrage (B10, B11) sont réalisées en forme de U, d'oméga ou de C, et/ou forment un assemblage par complémentarité de forme avec les nœuds de raccordement voisins (BK3, BK4) de la deuxième paire substantiellement dans la direction longitudinale (L) de la construction de véhicule (100).

8. Construction de véhicule (100) selon l'une quelconque des revendications précédentes, **caractérisée en ce qu'**au moins l'une des mâchoires de serrage (B10, B11) forme un assemblage par complémentarité de forme (B23) avec au moins l'un des nœuds de raccordement voisins (BK3, BK4) de la deuxième paire substantiellement dans la direction verticale (H) de la construction de véhicule (100).

9. Construction de véhicule (100) selon l'une quelconque des revendications précédentes, **caractérisée en ce que** l'élément de tension (B12) sollicite les deux mâchoires de serrage (B10, B11) l'une vers l'autre substantiellement dans la direction transversale (Q) de la construction de véhicule (100), et/ou les deux mâchoires de serrage (B10, B11) sollicitent l'un vers l'autre les nœuds de raccordement voisins (BK3, BK4) de la deuxième paire substantiellement dans la direction longitudinale (L) de la construction de véhicule (100).

10. Construction de véhicule (100) selon l'une quelconque des revendications précédentes, **caractérisée en ce que** les nœuds de raccordement voisins (BK3, BK4) de la deuxième paire forment deux coulisses (B13, B14) de forme complémentaire pour l'appui des mâchoires de serrage (B10, B11).

11. Construction de véhicule (100) selon l'une quelconque des revendications précédentes, **caractérisée en ce que** les mâchoires de serrage (B10, B11) servent au niveau de la structure porteuse à la transmission de forces de traction générées en cours d'utilisation de la construction de véhicule (100).

12. Construction de véhicule (100) selon l'une quelconque des revendications précédentes, **caractérisée en ce que** les nœuds de raccordement voisins (BK3, BK4) de la deuxième paire présentent des faces frontales intérieures (B15, B16), et les faces frontales intérieures (B15, B16) peuvent être reliées ensemble au niveau de la structure porteuse pour transmettre des forces de traction et/ou de compression générées en cours d'utilisation de la construction de véhicule (100).

13. Construction de véhicule (100) selon l'une quelconque des revendications précédentes, **caractérisée en ce que** les nœuds de raccordement voisins (BK3, BK4) de la deuxième paire forment une ouverture de passage (B17, B18) pour l'élément de tension (B12), et l'élément de tension (B12) est guidé à travers l'ouverture de passage (B17, B18), de préférence sans toucher les nœuds de raccordement voisins (BK3, BK4) de la deuxième paire.

14. Construction de véhicule (100) selon l'une quelconque des revendications précédentes, **caractérisée en ce que** les mâchoires de serrage (B10, B11) s'étendent substantiellement dans la direction longitudinale (L) de la construction de véhicule (100), et/ou l'élément de tension (B12) s'étend substantiellement dans la direction transversale (Q) de la construction de véhicule (100).

15. Construction de véhicule (100) selon l'une quelconque des revendications précédentes, **caractérisée en ce que** les nœuds de raccordement voisins (AK3, AK4, BK3, BK4) de la première et/ou de la deuxième paire présentent respectivement au moins un dispositif de raccordement (19, 20) servant à raccorder un segment de longeron (3.1 à 3.4, 4.1 à 4.4) et de préférence un segment de traverse (3.5 à 3.8, 4.5 à 4.8) et/ou un segment de montant vertical (3.9 à 3.12, 4.9 à 4.12).

16. Construction de véhicule (100) selon l'une quelconque des revendications précédentes, **caractérisée en ce que** les nœuds de raccordement voisins (BK3, BK4) de la deuxième paire sont formés respectivement à partir d'un profilé en U, en oméga ou en C, forment ensemble une forme de H et/ou servent à recevoir en sandwich par endroits un segment de longeron (3.1 à 3.4, 4.1 à 4.4), un segment de traverse (3.5 à 3.8, 4.5 à 4.8) et/ou un segment de montant vertical (3.9 à 3.12, 4.9 à 4.12).

17. Construction de véhicule (100) selon l'une quelconque des revendications précédentes, **caractérisée en ce que** les structures porteuses (T3, T4) forment respectivement un module de châssis de véhicule.

18. Construction de véhicule (100) selon l'une quelconque des revendications précédentes, **caractérisée en ce que** des segments de longeron (3.1 à 3.4, 4.1 à 4.4) des structures porteuses (T3, T4) sont reliés par des nœuds de raccordement voisins (AK3, AK4, BK3, BK4) de la première paire et/ou de la deuxième paire et forment substantiellement dans la direction transversale (Q) de la construction de véhicule (100) des constructions de longeron de châssis espacées les unes des autres.

19. Véhicule utilitaire, de préférence poids lourd, comprenant une construction de véhicule (100) selon l'une quelconque des revendications précédentes.
